# EUROPEAN PATENT APPLICATION

(11) **EP 4 800 987 A1**
(43) Date of publication of application: **02.09.2026**
(21) Application number: 23956425.5
(22) Date of filing: 25.10.2023
(51) Int. Cl.: H04L 25/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: XIAO, Han, Dongguan, Guangdong 523860 (CN)
(74) Representative: Taor, Simon Edward William
(86) International application number: PCT/CN2023/126579
(87) International publication number: WO 2025/086173

(57) **Abstract**

Provided are a wireless communication method and a communication device. The method comprises: a first device receiving a first data signal and a first reference signal, wherein the first reference signal is non-orthogonally superimposed with the first data signal. The first reference signal and the first data signal can be transmitted in a non-orthogonal superimposition manner, that is, transmission resources occupied by the first reference signal can also be used for transmitting the first data signal. Thus, the present application can reduce the resource overhead for transmitting a first reference signal.

## Description

### TECHNICAL FIELD

The present application relates to the technical field of communication, and more particularly, to a wireless communication method and a communication device.

### BACKGROUND

Due to the complexity and time-varying nature of the wireless channel environment, in the wireless communication system, the receiver needs to recover the received signal based on the estimation result of the channel. In addition to transmitting data signals on time-frequency resources, the transmitter also transmits a series of reference signals known to the receiver. Based on the received reference signals, the receiver may perform channel estimation. In order to improve the reliability of transmitting signals, the reference signal and the data signal transmitted on a plurality of transmission resources are transmitted in an orthogonal transmission manner. In the scenario of orthogonal transmission, a certain transmission resource can only be used to transmit one type of signal, resulting in lower utilization of the transmission resource.

### SUMMARY

The present application provides a wireless communication method and a communication device. Various aspects of the present application are described below.

In a first aspect, there is provided a wireless communication method. The method includes that: a first device receives a first data signal and a first reference signal. The first reference signal and the first data signal are non-orthogonally superimposed.

In a second aspect, there is provided a wireless communication method. The method includes that: a second device sends a first data signal and a first reference signal to a first device. The first reference signal and the first data signal are non-orthogonally superimposed.

In a third aspect, there is provided a communication device, the communication device being a first device. The communication device includes: a receiving unit, configured to receive a first data signal and a first reference signal. The first reference signal and the first data signal are non-orthogonally superimposed.

In a fourth aspect, there is provided a communication device, the communication device is a second device. The communication device includes: a sending unit, configured to send a first data signal and a first reference signal to a first device. The first reference signal and the first data signal are non-orthogonally superimposed.

In a fifth aspect, there is provided a communication device including a processor and a memory. The memory is used for storing one or more computer programs, and the processor is used for calling the computer programs in the memory, to cause the communication device to perform part or all of the operations in the method of the first aspect and/or second aspect.

In a sixth aspect, an embodiment of the present application provides a communication system, the communication system includes the above-described communication device. In another possible design, the system may further include: other devices that interact with the communication device, in the solution provided by the embodiment of the present application.

In a seventh aspect, an embodiment of the present application provides a computer readable storage medium storing a computer program. The computer program causes a communication device to perform part or all of the operations in the methods of the various aspects described above.

In an eighth aspect, an embodiment of the present application provides a computer program product. The computer program product includes a non-transitory computer readable storage medium storing a computer program, and the computer program is operable to cause a communication device to perform part or all of the operations in the methods of the various aspects described above. In some implementations, the computer program product may be a software installation package.

In a ninth aspect, an embodiment of the present application provides a chip including a memory and a processor. The processor may call and run a computer program in the memory to implement part or all of the operations in the methods of the various aspects described above.

In the present application, the first reference signal and the first data signal may be transmitted in a non-orthogonal superimposition, that is, the transmission resource occupied by the first reference signal may also be used for transmitting the first data signal. Therefore, the present application can reduce the resource overhead of transmitting the first reference signal.

### BRIEF DESCRIPTION OF THE DRAWINGS

FIG. 1 is a flowchart of a signal transmission in a wireless communication system to which an embodiment of the present application is applicable.
FIG. 2 is a schematic diagram of channel estimation and signal recovery to which an embodiment of the present application is applicable.
FIGS. 3 (a) to 3 (c) illustrate patterns of data symbols and pilot symbols under different configurations.
FIG. 4 illustrates a neural network model to which an embodiment of the present application is applicable.
FIG. 5 illustrates a neural network model to which an embodiment of the present application is applicable.
FIG. 6 illustrates a convolutional neural network to which an embodiment of the present application is applicable.
FIG. 7 illustrates a long short-term memory (LSTM) model to which an embodiment of the present application is applicable.
FIG. 8 illustrates a process of performing channel estimation based on a channel estimation module.
FIG. 9 is a wireless communication system 900 to which an embodiment of the present application is applicable.
FIG. 10 is a schematic flowchart of a wireless communication method according to an embodiment of the present application.
FIG. 11 illustrates a solution of transmitting a first signal and a second signal based on a linear superimposition manner according to an embodiment of the present application.
FIG. 12 illustrates an example diagram of a non-orthogonal superimposition of a second reference signal, a first reference signal and a first data signal in a multi-layer transmission.
FIG. 13 illustrates a pattern example in which the first reference signal and the second reference signal are orthogonally configured in a frequency domain, a time domain, or a time-frequency domain, in a transmission for the same layer or the same user.
FIG. 14 is an example diagram of a method for implementing code domain orthogonality according to an embodiment of the present application.
FIG. 15 illustrates a pattern example of an orthogonal configuration of first reference signals in a frequency domain, a time domain, or a time-frequency domain, in a transmission of different layers.
FIG. 16 is an example diagram of a method for implementing code domain orthogonality according to an embodiment of the present application.
FIG. 17 is a schematic diagram of a structure of a first device 1700 according to an embodiment of the present application.
FIG. 18 is an example diagram of a structure of an artificial intelligence (AI)/machine learning (ML) receiver according to the first embodiment.
FIG. 19 is an example diagram of a structure of an AI/ML receiver according to the second embodiment.
FIG. 20 is a schematic diagram of a structure of a communication device according to an embodiment of the present application.
FIG. 21 is a schematic diagram of a structure of another communication device according to an embodiment of the present application.
FIG. 22 is a schematic diagram of a structure of a communication apparatus according to an embodiment of the present application.

### DETAILED DESCRIPTION

Hereinafter, the technical solutions in the present application will be described with reference to the accompanying drawings.

### Signal transmission process in wireless communication system

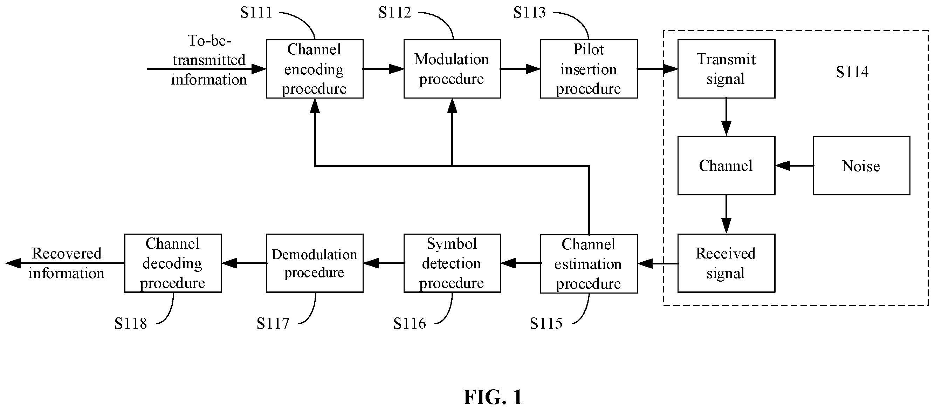

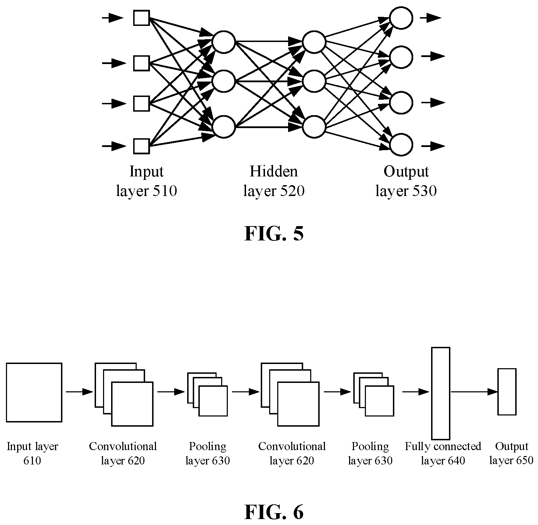

FIG. 1 is a flowchart of a signal transmission in a wireless communication system to which an embodiment of the present application is applicable. As illustrated in FIG. 1, the signal transmission process in the wireless communication system can be roughly divided into various signal processing procedures S111 to S118 illustrated in FIG. 1. Part or all of the signal processing procedures illustrated in FIG. 1 can be implemented by a separate AI model, and the specific implementation can refer to the description of FIGS. 5 to 8.

In the channel encoding procedure S111, the transmitter performs channel encoding on the to-be-transmitted information, to obtain the encoded bitstream. The to-be-transmitted information may be in a form of a bitstream.

In the modulation procedure S112, the bitstream is modulated into the modulated symbols.

In the pilot insertion procedure S113, pilot symbols are inserted into the above modulated symbols to form a to-be-transmitted pilot signal (or referred to as a reference signal). The pilot symbols can be used by the receiver for channel estimation and symbol detection.

In the transmission signal S114, the above signal is carried on the channel and transmitted to the receiver. Signals are usually superimposed with noise during the transmission process through the channel.

In the channel estimation procedure S115, the receiver may perform channel estimation based on the pilot signal, obtain channel state information-reference signal (CSI), and feed back the CSI to the transmitter through the feedback link, so that the transmitter can adjust channel coding, modulation, precoding, etc.

In the symbol detection procedure S116, symbol detection is performed on the received modulated symbols to obtain a detection result.

In the demodulation procedure S117, the received modulated symbols are demodulated based on the detection result to obtain a bitstream.

In some embodiments, the demodulation procedure S117 may belong to the symbol detection procedure S116.

In the channel decoding procedure S118, the bitstream is decoded to obtain the recovered information. The recovered information may be in a form of a bitstream.

It should be understood that the signal processing procedures S111 to S118 illustrated in FIG. 1 merely list the common signal processing procedures in a wireless communication system by way of example. The wireless communication system may further include other signal processing procedures such as resource mapping, precoding, interference cancellation, CSI measurement, and the like. These signal processing procedures may also be implemented by a separate AI model. For the sake of brevity, it will not be repeated in the present application.

### Channel estimation

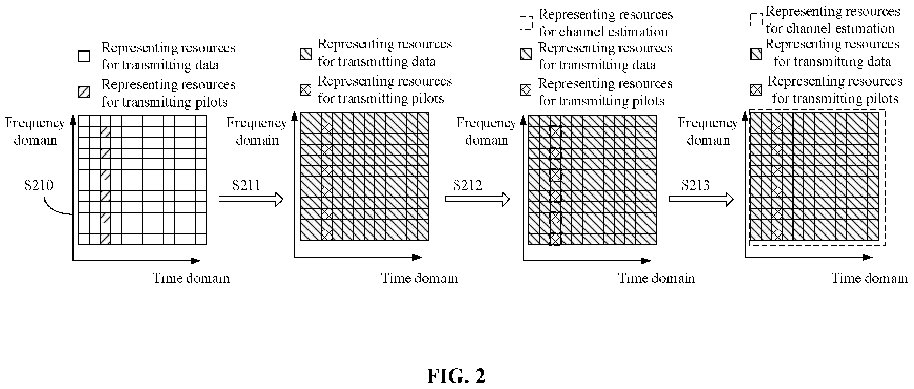

Due to the complexity and time-varying nature of the wireless channel environment, in a wireless communication system (e.g., the wireless communication system introduced above), the receiver needs to recover the received signal based on the estimation result of the channel. FIG. 2 is a schematic diagram of channel estimation and signal recovery to which an embodiment of the present application is applicable.

As illustrated in FIG. 2, in operation S210, in addition to the data signal, the transmitter also transmits, on the time-frequency resource, a series of pilot signals known to the receiver, such as a channel state information-reference signal (CSI-RS), a demodulation reference signal (DMRS), etc.

In operation S211, the transmitter transmits the above data signal and the pilot signal to the receiver through the channel.

The time-frequency resource occupied by the pilot signal is different from the time-frequency resource occupied by the data signal.

In operation S212, the receiver may perform channel estimation after having received the pilot signal. In a possible implementation, based on the pre-stored pilot signal and the received pilot signal, the receiver may estimate, through a channel estimation algorithm (e.g., least squares method (LS) channel estimation), channel information of the channel on which the pilot signal is transmitted.

In operation S213, the receiver may recover the channel information on the full time frequency resource by using an interpolation algorithm according to the channel information of the channel on which the pilot signal is transmitted, and use the channel information on the full time frequency resource for subsequent CSI feedback, data recovery, or the like.

Based on the above description with reference to FIG. 2, it can be seen that the time-frequency resource for transmitting the pilot signal and the time-frequency resource for transmitting the data signal are different time-frequency resources. That is, symbols for transmitting a data signal (referred to as "data symbols" for short) and symbols for transmitting a pilot signal (referred to as "pilot symbols" for short) are placed on different resource elements (REs). It can be seen that data symbols and pilot symbols are orthogonal to each other on time, frequency or code division resources. That is, the same RE can only be used to place data symbols or pilot symbols, and the RE transmitting pilot symbols cannot transmit data.

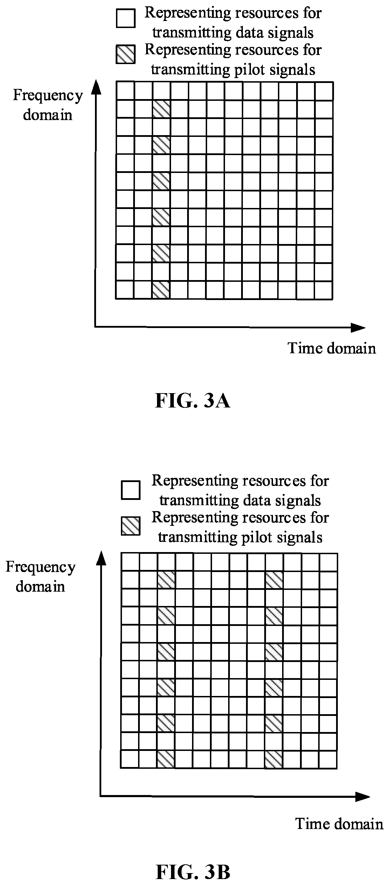

FIGS. 3 (a) to 3 (b) illuatrate patterns of data symbols and pilot symbols under different configurations.

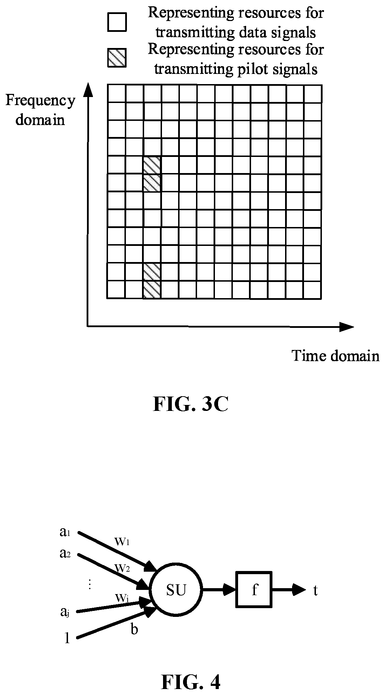

Referring to FIG. 3 (a), in a resource block (RB), pilot symbols are distributed with an interval of one symbol, on multiple REs corresponding to symbol 2 in the RB. Referring to FIG. 3 (b), in a RB, pilot symbols occupy part of multiple symbols corresponding to symbol 2 and symbol 10 in the RB. Referring to FIG. 3 (c), in a RB, pilot symbols occupy multiple groups of REs corresponding to symbol 2 in the RB, herein each group of REs includes two REs that are continuous in the frequency domain.

Generally, in the patterns illustrated in FIGS. 3 (a) to 3 (c), different patterns can be adapted to different communication environments. In some implementations, when the moving speed of the terminal device is relatively high and the time variation of the channel characteristics is relatively fast, a pattern in which the pilot symbols are densely distributed can be selected, which is helpful to improve the accuracy of channel quality estimation of the entire RB. For example, the pattern illustrated in FIG. 3 (b) may be selected.

In other implementations, when the moving speed of the terminal device is relatively slow and the time variation of the channel characteristics is relatively slow, a pattern in which the pilot symbols are sparsely distributed can be selected, which is helpful to reduce the overhead generated by transmitting the pilot signals on the premise of ensuring the accuracy of channel quality estimation of the entire RB.

### Neural network

In recent years, artificial intelligence research represented by neural network has made great achievements in many fields, and it will also play an important role in people's production and life for a long time in the future. Neural network may be understood as an operation model composed of multiple neuron nodes connected to each other, in which the connection between nodes may represent the weighted value from the input signal to the output signal, which is called parameter. Each node performs a weighted summation of different input signals, and produces the output through a specific activation function.

Neuronal structure may be as illustrated in FIG. 4. As illustrated in FIG. 4, neurons can rely on the activation function to implement nonlinear mapping. The input of the neuron can be denoted A, each dimension of the input is denoted aⱼ, and the corresponding parameter is denoted wⱼ, together with the summation unit (SU) to enhance or weaken the input. In addition, the output of the SU can be input into the activation function f, to obtain the output t, where the values of j are 1, 2, ..., n.

Common neural networks include convolutional neural network (CNN), recurrent neural network (RNN), deep neural network (DNN), etc.

Hereinafter, a neural network to which an embodiment of the present application is applicable will be described with reference to FIG. 5. The neural network illustrated in FIG. 5 can be divided into three categories according to the locations of different layers: an input layer 510, a hidden layer 520, and an output layer 530. In general, the first layer is the input layer 510, the last layer is the output layer 530, and the intermediate layers between the first layer and the last layer are hidden layers 520.

The input layer 510 is used for input data, for example, the input data may be a received signal received by a receiver. The hidden layer 520 is used to process the input data, for example, to decompress the received signal. The output layer 530 is used to output the processed output data, for example, to output a decompressed signal.

As illustrated in FIG. 5, the neural network includes multiple layers, each layer includes multiple neurons. The neurons between the layers may be fully connected or partially connected. For connected neurons, the output of the neurons of the previous layer can be used as the input of the neurons of the next layer.

The CNN is a deep neural network with a convolutional structure, and its structure is illustrated in FIG. 6, which may include an input layer 610, a convolutional layer 620, a pooling layer 630, a fully connected layer 640, and an output layer 650.

Each convolutional layer 620 may include multiple convolutional operators, and each neuron of the convolutional operator may locally connect with its input. The convolution operator is also called kernel, which can be regarded as a filter to extract specific information from the input signal. The convolution operator can essentially be a parameter matrix, which is usually predefined.

The parameter values in these parameter matrices need to be obtained through extensive training in practical applications. Each parameter matrix formed by the parameter values obtained through training can extract information from the input signal, thus helping the CNN to make a correct prediction.

When the CNN has multiple convolutional layers, the initial convolutional layer often extracts more general features, which can also be called low-level features. As the depth of CNN deepens, the features extracted through subsequent convolutional layers become more and more complex.

As for the pooling layer 630, since it is often necessary to reduce the number of training parameters, it is often necessary to periodically introduce a pooling layer after the convolutional layer. For example, it may be one convolutional layer followed by one pooling layer as illustrated in FIG. 6, or it may be multiple convolutional layers followed by one or more pooling layers. During signal processing, the purpose of the pooling layer includes reducing the spatial size of the extracted information. For example, a pooling layer may extract a local maximum or average feature of a certain layer. It can be seen that the pooling layer can effectively reduce the parameters of the network and mine local features, so that the convolutional neural network can converge quickly and obtain excellent performance.

As for the fully connected layer 640, after processing by the convolutional layer 620 and the pooling layer 630, the CNN is not sufficient to output the required output information. As previously described, the convolutional layer 620 and the pooling layer 630 will only extract features and reduce parameters brought by the input data. However, in order to generate the final output information (e.g., a bitstream of original information transmitted by the transmitter), the CNN also needs to utilize the fully connected layer 640. Generally, the fully connected layer 640 may include multiple hidden layers, and the parameters included in the multi-layer hidden layers may be trained and obtained in advance according to relevant training data of a specific task type. For example, the task type may include decoding a data signal received by a receiver, or for example, the task type may further include channel estimation based on a pilot signal received by the receiver.

After the multiple hidden layers in the fully connected layer 640, the last layer of the entire CNN, i.e., an output layer 650, is used for outputting the result. Typically, the output layer 650 is provided with a loss function (e.g., a loss function similar to classification cross-entropy) for calculating the prediction error or for evaluating the degree of difference between the result output by the CNN model (also known as the predicted value) and the ideal result (also known as the true value).

In order to minimize the loss function, the CNN model needs to be trained. In some implementations, the CNN model may be trained by using a backpropagation (BP) algorithm. The training process of BP consists of a forward propagation process and a back propagation process. In the forward propagation process (as illustrated in FIG. 6, the propagation from 610 to 650 is the forward propagation), the input data is input into the above layers of the CNN model, processed layer by layer and transmitted to the output layer. If the output result at the output layer is quite different from the ideal result, the minimization of the above loss function is taken as the optimization objective, and it is transferred to the back propagation (as illustrated in FIG. 6, the propagation from 650 to 610 is the back propagation). The partial derivative of the optimization objective to the weights of each neuron is obtained layer by layer. The partial derivatives constitute the gradient of the optimization objective to the weight vectors, which are used as the basis for modifying the model parameters. The training process of CNN is completed during the parameter modification process. When the above error reaches the expected value, the training process of CNN ends.

It should be noted that the CNN illustrated in FIG. 6 is only an example of a convolutional neural network. In a specific application, the convolutional neural network may also exist in the form of other network models, and the embodiment of the present application does not limit this.

The purpose of the RNN is to process sequence data. In the traditional neural network model (for example, in the CNN model), from the input layer to the hidden layer and then to the output layer, the layers are fully connected, and the nodes in each layer are unconnected. However, this ordinary neural network is powerless for many problems. For example, if you want to predict what the next word in a sentence will be, you usually need to use the previous words, since the previous and following words in a sentence are not independent. The reason why RNN is called a recurrent neural network is that the current output of a sequence is also related to the previous output. The specific manifestation is that the network will memorize the previous information and apply it to the calculation of the current output. That is, the nodes between the hidden layers are no longer unconnected but connected, and the input of the hidden layer includes not only the output of the input layer but also the output of the hidden layer at the previous moment. Theoretically, RNN can process sequence data with any length.

The training of RNN is the same as the training of traditional ANN (artificial neural network). The BP error back propagation algorithm is also used, but there is a difference. If the RNN is unrolled, the parameters W, U, and V are shared, which is not the case in the traditional neural network. Moreover, in using the gradient descent algorithm, the output of each step depends not only on the network for the current step, but also on the states of the network for the previous steps. For example, when t = 4, three more steps need to be passed backwards, and various gradients need to be added to the next three steps. This learning algorithm is called back propagation through time (BPTT) algorithm.

Since there are already artificial neural networks and convolutional neural networks, why do we still need recurrent neural networks? The reason is very simple. Whether it is a convolutional neural network or an artificial neural network, their premise is that the elements are independent of each other, and the input and output are also independent, such as cats and dogs. But in the real world, many elements are interconnected, such as the change of stocks over time; one person said: I like traveling, and my favorite place is Yunnan. I must go to __ when I have the opportunity in the future. When filling in the blank here, everyone should know that it is "Yunnan". The reason is that we infer from the content of the context, but it is quite difficult for the machine to achieve this. Therefore, there is the current recurrent neural network, whose essence is: it has the ability to remember like a human. Therefore, its output depends on the current input and memory. To explain RNN in one sentence, it means that a unit structure is reused.

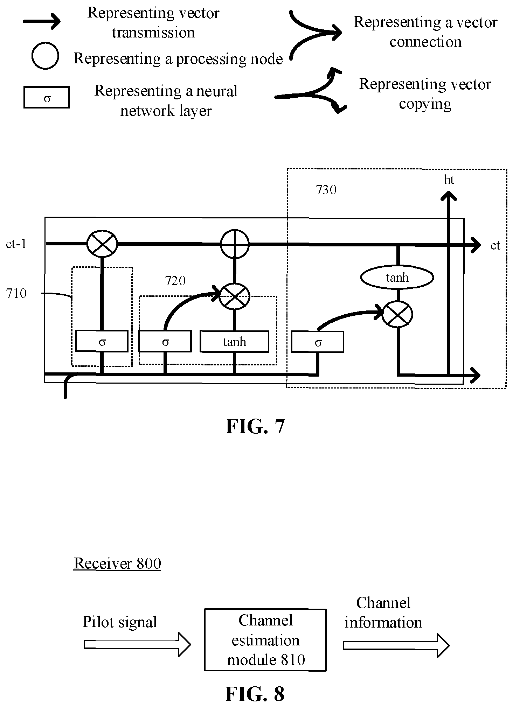

The long short-term memory (LSTM) model is a commonly used type of RNN. Referring to FIG. 7, the LSTM introduces a new memory unit cₜ (also referred to as "cell state"), which is used for the linear cyclic information transfer while outputs information to the external state hₜ of the hidden layer. At each moment t, cₜ records the history information up to the current moment. Unlike RNN only considering the most recent state, the memory unit will decide which states should be left and which states should be forgotten, which solves the shortcomings of traditional RNN in the long-term memory.

Referring to FIG. 7, in order to realize the selection of the state described above, the memory unit introduces a gate control mechanism to control the path of information transfer, similar to the gate in the data circuit, with "0" indicating closed and "1" indicating open. The memory unit includes a forgetting gate 710, an input gate 720, and an output gate 730. The forgetting gate is used to control how much information the memory unit cₜ₋₁ at the previous moment needs to forget. The input gate is used to control how much information needs to be stored in the candidate state $\hat{{c}_{t}}$ at the current moment. The output gate is used to control how much information the memory unit cₜ at the current moment needs to output to the external state ht.

### Channel estimation based on AI decoder

The channel estimation based on AI decoder aims to use the AI-based channel estimation module for processing the pilot signal received by the receiver to realize channel estimation. The internal implementation of the AI-based channel estimation module may be a neural network such as DNN or CNN. FIG. 8 illustrates a process of performing channel estimation based on a channel estimation module. Referring to FIG. 8, the pilot signal received by the receiver 800 is an input to the channel estimation module 810, and correspondingly, the channel estimation module 810 processes the input pilot signal to output channel information. In addition, in some implementations, other auxiliary information may be added in addition to the pilot signal, to improve the accuracy of channel information output by the channel estimation module. For example, the channel estimation module 810 may also be input with an original sequence of pilot signals pre-stored by the receiver 800, an energy level of the receiver 800 receiving the pilot signals, a transmission delay in transmitting the pilot signals, or noise in transmitting the pilot signals, etc.

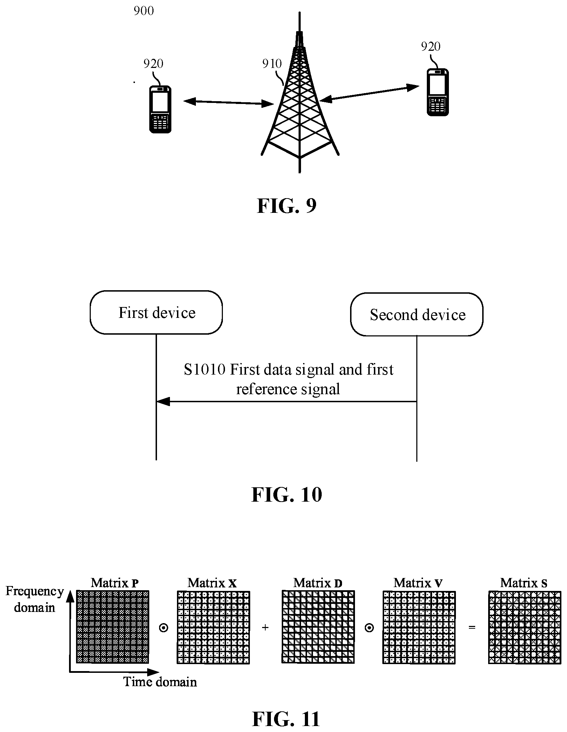

The communication process and terminology related to the embodiments of the present application are described above with reference to FIGS. 1 to 8. The communication system to which the embodiment of the present application is applied will be described below with reference to FIG. 9.

FIG. 9 is a wireless communication system 900 to which an embodiment of the present application is applicable. The wireless communication system 900 may include a communication device. The communication device may include, for example, a network device 910 or a terminal device 920. The network device 910 may be a device that communicates with the terminal device 920. The network device 910 may provide communication coverage for a specific geographic area and may communicate with the terminal device 920 located within the coverage area.

FIG. 9 exemplarily illustrates one network device 910 and two terminal devices 920. Optionally, the wireless communication system 900 may include multiple network devices. The coverage range of each network device may include another number of terminal devices, which is not limited in the embodiment of the present application.

Optionally, the wireless communication system 900 may further include other network entities, such as a network controller and a mobility management entity, which is not limited in the embodiment of the present application.

Optionally, the terminal devices 920 may also communicate directly with each other. For example, two terminal devices 920 may communicate through a device-to-device (D2D) link.

It should be noted that in the following description, the first device and the second device will be described as examples. In some implementations, the first device may be the network device 910 described above, and correspondingly, the second device may be the terminal device 920 described above. In other implementations, the first device may be the terminal device 920 described above, and correspondingly, the second device may be the network device 910 described above. In other implementations, the first device may be the terminal device 920 described above, and correspondingly, the second device may be the terminal device 920 described above. The embodiment of the present application does not specifically limit this.

It should be understood that the technical solutions of the embodiments of the present application can be applied to various communication systems, such as a fifth generation (5G) system or a new radio (NR) system, a long term evolution (LTE) system, an LTE frequency division duplex (FDD) system, an LTE time division duplex (TDD) system, and the like. The technical solution provided in the present application can also be applied to future communication systems, such as a sixth generation mobile communication system, a satellite communication system, and the like.

The terminal device in the embodiment of the present application may also be referred to as user equipment (UE), an access terminal, a subscriber unit, a subscriber station, a mobile flatform, a mobile station (MS), a mobile terminal (MT), a remote station, a remote terminal, a mobile device, a user terminal, a terminal, a wireless communication device, a user agent or a user apparatus. The terminal device in the embodiment of the present application may be a device that provides voice and/ or data connectivity to a user, and may be used to connect people, objects and machines, for example, a handheld device having a wireless connection function, an in-vehicle device, or the like. The terminal device in the embodiment of the present application may be a mobile phone, a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the UE may be used to act as a base station. For example, a UE may act as a scheduling entity that provides sidelink signals between UEs in V2X or D2D, etc. For example, the cellular telephone and the automobile communicate with each other by using sidelink signals. Communication between the cellular phone and smart home device does not require the relay of communication signals through the base station.

The network device in the embodiment of the present application may be a device for communicating with a terminal device. The network device may also be referred to as an access network device or a radio access network device, for example, the network device may be a base station. The network device in the embodiment of the present application may refer to a radio access network (RAN) node (or device) that enables the terminal device to be accessed the wireless network. The base station may broadly cover or be replaced with the following various names: a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point, a transmission node, a receive-send node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a master node, or the like, or a combination thereof. The base station may also refer to a communication module, modem, or chip disposed within the aforementioned apparatus or apparatus. The base station may also be a mobile switching center, or a device functioning as a base station in device-to-device (D2D), a vehicle-to-everything (V2X), a machine-to-machine (M2M) communication, or a network-side device in a 6G network, or a device functioning as a base station in a future communication system, or the like. The base stations may support networks of the same or different access technologies. The embodiments of the present application do not limit the specific technology and the specific device form adopted by the network device.

The base station may be fixed or mobile. For example, a helicopter or drone may be configured to act as a mobile base station, and one or more cells may move according to the position of the mobile base station. In other examples, a helicopter or drone may be configured as a device to communicate with another base station.

In some deployments, the network device in the embodiment of the present application may refer to a CU or a DU, or the network device includes a CU and a DU. The gNB may also include an AAU.

The network device and terminal device may be deployed on land, including indoor or outdoor, handheld, or vehicle-mounted; they may also be deployed on the water; they may also be deployed in the air (e.g., on aircraft, balloons and satellites). In the embodiment of the present application, the scenario in which the network device and the terminal device are located is not limited.

It should be understood that the communication device mentioned in the present application may be a network device or a terminal device. Exemplarily, both the first device and the second device may be communication devices. For example, the first device is a network device, and the second device is a terminal device. For another example, the first device is a terminal device, and the second device is a network device. For another example, both the first device and second device are network devices, or both are terminal devices.

It should also be understood that all or part of the functions of the communication device in the present application may also be implemented by software functionality running on hardware, or by virtualization functionality instantiated on a platform, such as a cloud platform.

Currently, in the related art, in order to improve the reliability of transmitting signals, the reference signal and the data signal transmitted on a plurality of transmission resources are transmitted in an orthogonal transmission manner. Here, the transmission resource may be an RE. The reference signal may be used to implement channel estimation. That is, the reference signal may include the pilot signal described above. Orthogonal transmission can be understood as processing signals transmitted on multiple transmission resources into mutually orthogonal signals for transmission, and the orthogonal signals are transmitted independently of each other without interfering with each other. That is, orthogonal signals will occupy different time domain and frequency domain resources.

In the scenario of orthogonal transmission, a certain transmission resource can only be used to transmit one type of signal, resulting in lower utilization of the transmission resource. On the other hand, when the total transmission resources are constant, if the number of transmission resources occupied by a certain type of signal increases, it means that the number of transmission resources available for transmitting another type of signal decreases, and the another type of signal may not be transmitted in time. For example, in case that the total transmission resource is constant, if the number of transmission resources occupied by the reference signal increases, it means that the number of transmission resources available for transmitting the data signal decreases, and the data signal may not be transmitted in time. As another example, if the number of transmission resources occupied by the data signal increases, it means that the number of transmission resources available for transmitting the reference signal decreases, which may lead to a decrease in the accuracy of channel estimation based on the reference signal.

As illustrated in FIG. 2, orthogonal transmission between the data signal and the reference signal may mean that the data signal and the reference signal occupy different REs. That is, the data signal and the reference signal cannot occupy the same RE. If the reference signal occupies a larger number of REs, the number of REs used for transmitting the data signal will decrease, resulting in the data signal being unable to be transmitted in time. If the reference signal occupies fewer REs, the accuracy of channel estimation based on the reference signal may be reduced.

In view of the above problems, an embodiment of the present application provides a wireless communication method illustrated in FIG. 10. The method illustrated in FIG. 10 may be performed by a first device and a second device. The first device and/or the second device may be a communication device.

The method illustrated in FIG. 10 may include operation S1010.

In operation S1010, the first device receives the first data signal and the first reference signal sent by the second device.

The first reference signal and the first data signal may be non-orthogonally superimposed. That is, the first data signal and the first reference signal may be superimposed on the same transmission resource (also referred to as a "target transmission resource"). This transmission may also be referred to as a non-orthogonal transmission. Exemplarily, the target transmission resource may be the first RE. That is, the first data signal and the first reference signal may both occupy the first RE.

In some embodiments, the first reference signal may include: a CSI-RS, a DMRS, a phase-tracking reference signal (PT-RS), a sounding reference signal (SRS), a synchronization signal block (SS/PBCH block, SSB), or a positioning reference signal (PRS), and the like.

In order to facilitate understanding, the non-orthogonal transmission manner applicable to the embodiment of the present application will be described below with reference to FIG. 11. It should be noted that the non-orthogonal transmission manner applicable to the embodiment of the present application is not limited thereto.

Referring to FIG. 11, assuming that the target transmission resource for non-orthogonal transmission belongs to the transmission resource set, the non-orthogonal superimposed signals transmitted on one or more target transmission resources in the transmission resource set are represented by a matrix S. Correspondingly, the matrix S is determined by the formula S = V⊙D + X⊙P, or the matrix S satisfies V⊙D + X⊙P. The matrix V represents the data weights in the transmission resource set. The matrix X represents the pilot weights in the transmission resource set. The matrix D represents a first data signal transmitted on a target transmission resource in the transmission resource set. The matrix P represents a first reference signal transmitted on a target transmission resource in the transmission resource set. ⊙ represents the Hadamard product.

The transmission resource set may include N × M transmission resources. For example, N may represent the number of subcarriers, and M may represent the number of time-domain OFDM symbols. Here, M and N are positive integers. The transmission resource may be an RE. Exemplarily, the transmission resource set may be 1 RB, 1 subband, multiple consecutive RBs, multiple consecutive subbands, or the like.

The matrix may satisfy that: the matrix D∈*Q*^{*N*×*M*}. Q represents a data symbol set corresponding to the first data signal. The matrix P may satisfy that: P∈*P*^{*N*×*M*}. P represents a pilot symbol set corresponding to the first reference signal. The matrix S may satisfy that: S∈*C*^{*N*×*M*}. C denotes a set of complex numbers.

In some implementations, assuming that the energy threshold corresponding to the target transmission resource is 1, the matrix V may be determined based on the formula V = *sqrt*(A), and the matrix X may be determined based on the formula X = *sqrt*(1 - A). The matrix A ∈[0, 1], *sqrt*() represents the square root calculation. For example, the matrix V may satisfy that: V ∈ [0,1]^{*N*×*M*}. The matrix X may satisfy that: X=*sqrt*(1-A)∈[0,1]^{*N*×*M*}. Here, A∈[0,1]^{*N*×*M*}.

It should be noted that, in the embodiment of the present application, the number of target transmission resources included in the transmission resource set is not limited, and accordingly, the dimension of the matrix (for example, the matrix S, the matrix V, the matrix D, the matrix P, the matrix A, the matrix V, the matrix X, and the like) described above is associated with the dimension (or the number) of the target transmission resources in the transmission resource set. For example, each element in the matrix may correspond to one transmission resource in the transmission resource set. In some implementations, the dimension of the matrix is the same as the dimension of the target transmission resources in the transmission resource set. Taking the transmission resource set being an RB as an example, the RB may be expressed as including an N-by-M array of REs, and all the REs in the RB are superimposed transmission resources. Correspondingly, the matrix mentioned above may be a matrix with N rows and M columns.

Generally, when the target transmission resource allocated by the system changes, the dimension of the above matrix also changes. For example, if the target transmission resource allocated by the system is two RBs, the dimension of the matrix is the same as that of the REs in the two RBs. Assuming that RB can be expressed as including an N-by-M array of REs, then two RBs include an 2N-by-2M array of REs, and the dimensions corresponding to the two RBs are 2N-by-2M. At this time, when all REs in the two RBs are superimposed transmission resources, the matrix described above may be a matrix with 2N rows and 2M columns.

Generally, for a non-orthogonally transmitted first reference signal, the first device may receive the first reference signal based on the first model. The first model helps to improve the reception performance of the signal. The first model may be an AI model and/or an ML model. In this case, the first device may also be referred to as an AI/ML receiver.

As described above, the implementation of functions such as channel estimation and symbol detection need to be based on reception and processing of reference signals. In the related art described above, the reference signal may occupy a large amount of system bandwidth resources. In the present application, the first reference signal and the first data signal may be transmitted in a non-orthogonal superimposition, the resource occupied by the first reference signal may also be used for transmitting the first data signal. Therefore, the present application can reduce the resource overhead of the first reference signal, and even realize zero reference signal overhead.

In some embodiments, the first device may also receive a second reference signal.

The second reference signal may include one or more reference signals. The number of reference signals included in the second reference signal may be denoted by N₂. N₂ may be a positive integer. In view of the first reference signal and the second reference signal received by the first device, it is understood that the first device may receive multiple reference signals.

The second reference signal may include one or more of: a CSI-RS, a DMRS, a PT-RS, an SRS, an SSB, or a PRS, or the like.

The second reference signal may be a signal different from the first reference signal. For example, the type of the second reference signal may be different from the type of the first reference signal. As another example, the function of the second reference signal may be different from the function of the first reference signal.

The second reference signal may be transmitted through a single layer or may be transmitted through multiple layers. The second reference signal may be a reference signal for a single user, or a reference signal for multiple users.

The second reference signal may be non-orthogonally superimposed with the first data signal.

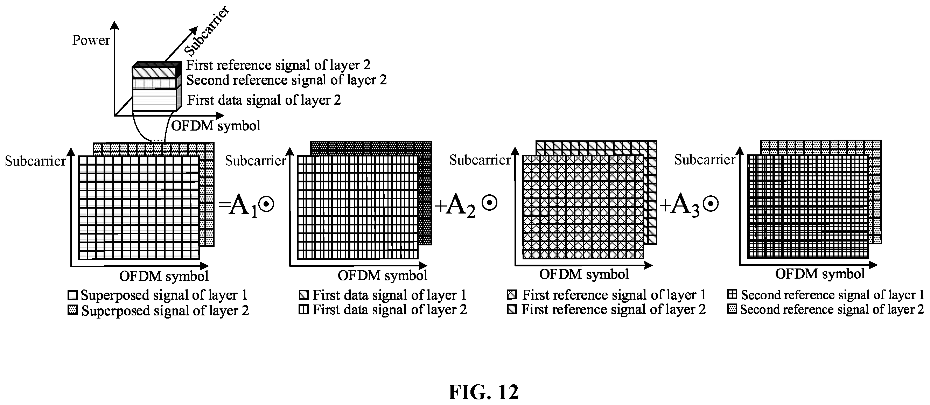

FIG. 12 illustrates an example diagram of a non-orthogonal superimposition of a second reference signal, a first reference signal and a first data signal in a multi-layer transmission.

FIG. 12 takes an example of a transmission resource set including one RB, a two-layer transmission, and a second reference signal including one reference signal.

As illustrated in Fig. 12, the symbol S after non-orthogonal superimposition may satisfy that: S = A₁⊙D + A₂⊙P₁ + A₃⊙P₂. D is a data matrix of the first data signal. D may satisfy that: D∈*Q*^{*N*×*M*}. P₁ is a pilot matrix of the first reference signal. P₁ may satisfy that: P₁∈P^{N×M}. P₂ is the pilot matrix of the second reference channel, and P₂ may satisfy that: P₂∈*P*^{N×M}. P may represent a pilot symbol set. A₁, A₂, and A₃ are power proportional allocation matrices of the first data signal, the first reference signal, and the second reference signal, respectively.

It should be noted that FIG. 12 is merely an example. That is, the technical solutions provided by the embodiments of the present application can also be applied to other cases. Other cases include one or more of the following cases: the number of reference signals in the second reference signal being greater than 1, the number of transmission layers being greater than 2 or equal to 1, and multi-user.

As can be seen from FIG. 12, by allocating corresponding power to the first data signal, the first reference signal, and the second reference signal, it can realize not only non-orthogonal superimposition between the first data signal and the first reference signal, but also non-orthogonal superimposition between the first data signal and the second reference signal.

The inventor of the present application has found that the second reference signal may occupy the same transmission resource as the first reference signal, resulting in interference between the first reference signal and the second reference signal. With continued reference to FIG. 12, in layer 1, the first reference signal can occupy any RE within the RB, and the second reference signal can also occupy any RE within the RB. If the first reference signal and the second reference signal occupy the same RE in layer 1, there may be interference between the first reference signal and the second reference signal.

In view of the above problem, the present application proposes that the first reference signal and the second reference signal may satisfy that: for transmission of a same layer and/or transmission of a same user, the first reference signal and the second reference signal are orthogonal, or a code domain correlation between the first reference signal and the second reference signal is less than or equal to a first threshold.

In some embodiments, the orthogonality may refer to one or more of: frequency domain orthogonality, time domain orthogonality, time-frequency domain orthogonality, or code domain orthogonality.

In some embodiments, frequency domain orthogonality may refer to placing different reference signals (including a first reference signal and a second reference signal) at subcarriers with different frequency domain intervals. In some embodiments, time domain orthogonality may refer to placing different reference signals at OFDM symbols with different time domain intervals. In some embodiments, time-frequency domain orthogonality may refer to placing different reference signals at an interval of RE in time-frequency domain.

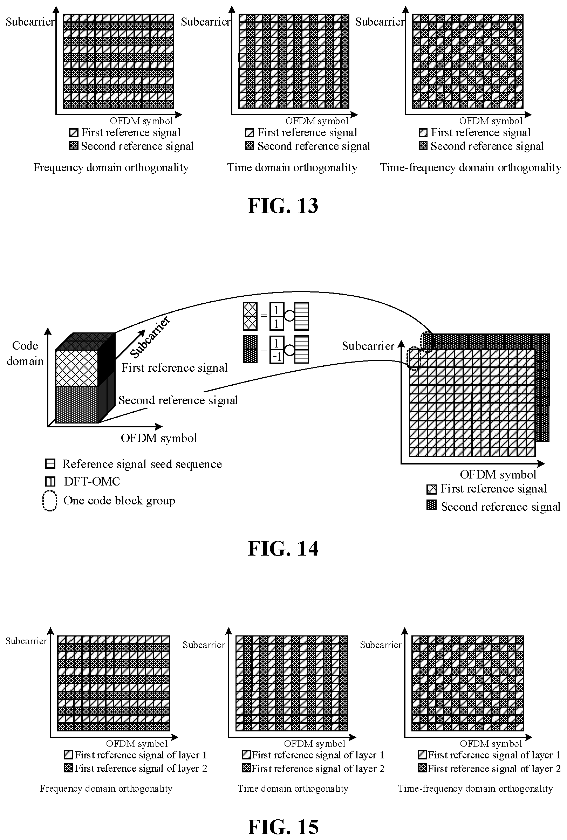

FIG. 13 illustrates a pattern example in which the first reference signal and the second reference signal are orthogonally configured in a frequency domain, a time domain, or a time-frequency domain, in a transmission for the same layer or the same user. As illustrated in FIG. 13, in case that the first reference signal and the second reference signal are orthogonal in the frequency domain, the first reference signal and the second reference signal are placed at intervals with an subcarrier as granularity. When the first reference signal and the second reference signal are orthogonal in the time domain, the first reference signal and the second reference signal are placed at intervals with an OFDM symbol as granularity. When the first reference signal and the second reference signal are orthogonal in the time-frequency domain, the first reference signal and the second reference signal are placed at intervals with a RE as granularity.

It should be noted that FIG. 13 is merely an example, and the present application does not limit the patterns of the first reference signal and the second reference signal. For example, the patterns of the first reference signal and the second reference signal may satisfy the condition that in the same RE, one type of reference signal is non-orthogonally superimposed on only the first data signal. That is, the condition may include that a plurality of reference signals cannot be placed on the same RE.

In some embodiments, code domain orthogonality may mean the sequence orthogonality of the first reference signal and the second reference signal. Code domain orthogonality can be achieved by code division multiplexing (CDM).

It may be understood that in case of the code domain orthogonality, the first reference signal and the second reference signal may be placed on the same RE. That is, the first RE may simultaneously carry the first data signal, the first reference signal and the second reference signal.

As a possible embodiment, the code domain orthogonality may satisfy that: ∥P₁⊙P₂∥_{F}=0. P₁ represents the pilot matrix of the first reference signal, P₂ represents the pilot matrix of the second reference signal, and ∥ ∥_{F} represents the Frobenius norm. P₁ may satisfy that: *P*₁∈*C^{N×M}.* P₂ may satisfy that: *P*₂∈*C*^{*N*×}*^{M}.*

FIG. 14 is an example diagram of a method for implementing code domain orthogonality according to an embodiment of the present application. All N × M REs allocated by the system may be divided into G code block groups (CBGs), G =*NM* / (*N*₂+1)*.* N₂ represents the number of reference signals included in the second reference signal. The pilots of different layers in the group are distinguished by a discrete Fourier transform orthogonal mask code (DFT-OMC). The first reference signal sequence and the second reference signal sequence may be generated by: p_{1,*g*}=s_{g} ⊙ c₁; P_{2,*g*}=s_{g} ⊙ c₂. Here, p_{1,*g*}∈C^{(*N*2+1)×1} and p_{1,*g*}∈*C*^{(*N*2+1)×1} represent the vectorized first reference signal symbol and second reference signal symbol in the g-th group, respectively. Here, *g*∈[1,*G*]. s_{g}∈*S*^{(*N*2*+*1)×*1*} represents the reference signal seed sequence of the g-th group, and S represents a set of available symbols having zero mean and average normalized power that are to constitute the seed sequence. For example, S may represent a binary phase shift keying (BPSK) or quadrature phase shift keying (QPSK) symbol set, or the like. c₁∈*C*^{(*N*2*+*1)×*1*} and c₂∈*C*^{(*N*2*+*1)×*1*} represent the DFT-OMCs of the first reference signal and second reference signal, respectively. Further, c₁ and c₂ may be generated by using DFT vectors. For example, c_{z}*=*[1,...,*e*^{*-j2πk*(*z-*1)/(*N*2*+*1)},...,*e*^{*-j2πk*(*z-*1)/(*N*2*+*1)}]^{T}*.* Here, *k∈*[0, *N*₂], *z*∈{1, 2}.

It should be noted that the present application does not limit the method of implementing code domain orthogonality. The above method is only an example of a method of implementing code domain orthogonality, and other methods may be used to implement code domain orthogonality.

It may be understood that, in contrast to the related art such as frequency division multiplexing (FDM), which needs to vacate part of REs for reference signals, CDM can achieve intra-layer pilot signal orthogonality while ensuring that REs carrying data within a layer can be configured with pilots, to maintain an accurate channel estimation gain of superimposed pilots while avoiding an interference of intra-layer pilot signals.

In some embodiments, code domain correlation less than or equal to the first threshold may refer to: ∥P₁⊙P₂∥_{F}≤T₁. P₁ represents a pilot matrix of the first reference signal, P₂ represents a pilot matrix of the second reference signal, and T₁ represents a first threshold. The first threshold may be a relatively small positive number.

That is, the technical solution can reduce the code domain correlation between the first reference signal and the second reference signal, thereby avoiding interference between the first reference signal and the second reference signal as much as possible.

The present application may also be used for multi-user transmission and/or multi-layer transmission. There may be interference between reference signals in transmission for different users and/or transmission for different layers. With continued reference to FIG. 12, the first reference signal of layer 1 and the first reference signal of layer 2 may occupy the same RE, resulting in interference between the first reference signal of layer 1 and the first reference signal of layer 2.

The present application proposes that the first reference signals may satisfy that: the first reference signal of the first layer and the first reference signal of the second layer are orthogonal, or a code domain correlation between the first reference signal of the first layer and the first reference signal of the second layer is less than or equal to a second threshold; and/or the first reference signal for the first user and the first reference signal for the second user are orthogonal, or a code domain correlation between the first reference signal for the first user and the first reference signal for the second user is less than or equal to a third threshold. The second threshold and the third threshold are both positive numbers.

In case of transmitting the second reference signals, the second reference signals may satisfy that: the second reference signal of the first layer and the second reference signal of the second layer are orthogonal, or a code domain correlation between the second reference signal of the first layer and the second reference signal of the second layer is less than or equal to a second threshold; and/or the second reference signal for the first user and the second reference signal for the second user are orthogonal, or a code domain correlation between the second reference signal for the first user and the second reference signal for the second user is less than or equal to a third threshold.

The first layer may be the l-th layer in the multiple layers, and the second layer may be the j-th layer in the multiple layers. l and j are used to indicate the orders or indexes of the first and second layers in the multiple layers, respectively. Both j and l may be a non-negative integer. j and l may satisfy j ≠ l.

The first user may be the l-th user among the multiple users, and the second user may be the j-th user among the multiple users. l and j are used to indicate the orders or indexes of the first user and the second user in the multiple users, respectively. Both j and l may be a non-negative integer. j and l may satisfy j ≠ l.

It should be noted that the solution for multi-user transmission is similar to the solution for multi-layer transmission in the present application. The following discusses a multi-layer technical solution as an example. A technical solution for multiple users can be obtained by replacing "first layer" with "first user" and replacing "second layer" with "second user".

In some embodiments, the orthogonality may refer to one or more of: frequency domain orthogonality, time domain orthogonality, time-frequency domain orthogonality, or code domain orthogonality.

In some embodiments, frequency domain orthogonality may refer to placing the same reference signal of different layers at subcarriers with different frequency domain intervals, and/or placing the same reference signal of different users at subcarriers with different frequency domain intervals. In some embodiments, time domain orthogonality may refer to placing the same reference signal of different layers at OFDM symbols with different time domain intervals, and/or placing the same reference signal of different users at OFDM symbols with different time domain intervals. In some embodiments, time-frequency domain orthogonality may refer to placing the same reference signal of different layers at an interval of RE in time-frequency domain, and/or placing the same reference signal of different users at an interval of RE in time-frequency domain.

FIG. 15 illustrates a pattern example of an orthogonal configuration of first reference signals in a frequency domain, a time domain, or a time-frequency domain, in a transmission of different layers. The first layer may be layer 1 in FIG. 15, the second layer may be layer 2 in FIG. 15. As illustrated in FIG. 15, in case of frequency domain orthogonality, the first reference signal of layer 1 and the first reference signal of layer 2 are placed at intervals with an subcarrier as granularity. In case of time domain orthogonality, the first reference signal of layer 1 and the first reference signal of layer 2 are placed at intervals with an OFDM symbol as granularity. In the case of time-frequency domain orthogonality, the first reference signal of layer 1 and the first reference signal of layer 2 are placed at intervals with an RE as granularity.

The pattern of reference signals for different users may be similar to FIG. 15. For example, "a first reference signal of layer 1" in FIG. 15 may represent a reference signal for a first user, "a first reference signal of layer 2" in FIG. 15 may represent a reference signal for a second user.

It should be noted that FIG. 15 is merely an example, and the present application does not limit the patterns of the first reference signal of the first layer and the first reference signal of the second layer. For example, the pattern of the first reference signal may satisfy the condition that: in the same RE, only the first reference signal of one layer or the first reference signal for one user is non-orthogonally superimposed on only the first data signal.

In some embodiments, the first reference signals of different layers or for different users may be orthogonal in the code domain. For example, code domain orthogonality may satisfy that: ∥P'*ₗ*⊙P'*ⱼ*∥_{F}=0. P'*ₗ* represents a pilot matrix of a first reference signal of a first layer or a first reference signal for a first user, and P'*ⱼ* represents a pilot matrix of a first reference signal of a second layer or a first reference signal for a second user. P'*ₗ* may satisfy that: P'*ₗ*∈*C*^{*N*×*M*}. P'*ⱼ* may satisfy that: P*'ⱼ*∈*C*^{*N*×}*^{M}.*

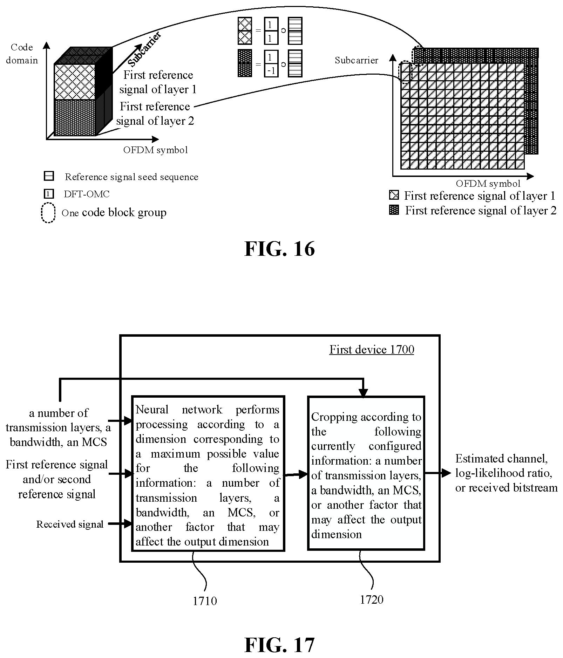

FIG. 16 is an example diagram of a method for implementing code domain orthogonality according to an embodiment of the present application. All N × M REs allocated by the system may be divided into G code block groups (CBGs), *G =NM* / (*N*₂*+*1)*.* N₂ represents the number of reference signals included in the second reference signal. The pilots of different layers in the group are distinguished by DFT-OMC. That is, the pilot sequence may be generated by p'_{*l*,g}=s'_{g}⊙c'*ₗ*. Here, p'_{*l*,*g*}∈*C*^{*L*×1} represents the vectorized first reference signal symbol in the g group of the L layer, *l*∈[1, L], and *g*∈[1, *G*]. s'_{g}∈*S*^{*l*×1} represents the first reference signal seed sequence of the g-th group, and S represents a set of available symbols having zero mean and average normalized power that are to constitute the seed sequence, such as a BPSK or QPSK symbol set, etc. *c'ₗ*∈*C*^{(*N*2*+*1)×*1*} denotes the DFT-OMC of the first reference signal of the L layer, *l*∈[1, L]. Similarly, c'*ₗ* may be generated by using DFT vectors, i.e. c'*ₗ=*[1,...,*e*^{*-j2πk*(*l-*1)/*L*},...,*e*^{*-j2π*(*L-*1)(*l-*1)/*L*}]^{T}*.* Here, *k*∈[0, *L*-1].

It should be noted that the present application does not limit the method of implementing code domain orthogonality. The above method is only an example of a method of implementing code domain orthogonality, and other methods may be used to implement code domain orthogonality.

It may be understood that, in contrast to the related art such as FDM, which needs to vacate part of REs for reference signals, CDM can achieve an inter-layer orthogonality while ensuring that REs carrying data within a layer can be configured with pilots, to maintain an accurate channel estimation gain of superimposed pilots while avoiding an inter-layer interference.

In some embodiments, code domain correlation less than or equal to the second threshold may refer to: ∥P'*ₗ*⊙P'*ⱼ*∥_{F}≤T₂. P'*ₗ* represents the pilot matrix of the first reference signal of the first layer, P'*ⱼ* represents the pilot matrix of the first reference signal of the second layer, and T₂ represents the second threshold.

The second threshold may be a smaller positive number. That is, the technical solution can reduce the code domain correlation between the first reference signal of the first layer and the second reference signal of the second layer, thereby avoiding interference between the first reference signals of different layers as much as possible.

In some embodiments, code domain correlation less than or equal to the third threshold may refer to: ∥P'*ₗ*⊙P'*ⱼ*∥_{F}≤T₃. P'*ₗ* represents a pilot matrix of a first reference signal for a first user, P'*ⱼ* represents a pilot matrix of a first reference signal for a second user, and T₃ represents a third threshold.

The third threshold may be a smaller positive number. That is, the technical solution can reduce the code domain correlation between the first reference signal for the first user and the second reference signal for the second user, thereby avoiding interference between the first reference signals of different users as much as possible.

It may be understood that, for frequency domain orthogonality, time domain orthogonality, or time-frequency domain orthogonality, it is necessary to vacate part of the REs to achieve low interference between reference signals. However, for code domain orthogonality or low code domain correlation, even if different reference signals, or reference signals for different layers/users are superimposed on any RE, low interference between reference signals can be achieved. That is, while reducing interference, the present application can use a reference signal that is non-orthogonal to the first data signal, to perform more accurate channel estimation, sensing, synchronization, and the like. In addition, code domain orthogonality can abandon the concept of reference signal patterns in time domain, frequency domain and time-frequency domain orthogonality, thus avoiding more complicated designs of the system to support different patterns.

As described above, the reference signal may be received and processed by using the first model. For example, the first device may process the first reference signal by using the first model.

In order to adapt the first device to different system configurations, the related art proposes the following solution 1 and solution 2.

Solution 1 proposes to mix a variety of data together to train a generalized model. However, the applied scope of solution 1 is relatively narrow. For example, solution 1 may address the case where the system configurations such as transmission speed and/or channel conditions in cells vary. However, for the case that different bandwidths, different numbers of transmission layers, different MCS configurations, etc. will directly affect the output dimension of the first model, it is difficult to train a suitable generalization model in solution 1.

Solution 2 may address the case where the output dimensions or structures of the first model vary. For example, different bandwidths, different numbers of transmission layers, different MCS configurations, etc. will directly affect the output dimension of the first model. In this case, the structure of the first model changes. The second solution is to train multiple models and rely on the model switching mechanism to change the model structure. It can be understood that the model switching mechanism will bring about signaling redundancy of the system.

To sum up, in the related art, a model can mostly only be applied to scenarios where the system configuration remains unchanged or changes little, and has the lower generalization and scalability.

In view of the above problems, the present application proposes that the output of the first model is determined based on a value configurable by the communication system. The output of the first model may be understood as the output dimension of the first model, that is, the structure of the first model. It may be understood that the output of the first model may not be determined in terms of the actual configuration of the communication system, but may be determined based on the values that the communication system can configure. Therefore, the first model can be adapted to different communication system configurations, so that the first model has the higher generalization and scalability.

It should be noted that the value configurable by the communication system may include one or more of following values: a number of transmission layers, a bandwidth, a modulation and coding scheme (MCS), or a number of transmission users. That is, for the scenario related to the second solution, the present application can meet the requirements by training one first model, thereby avoiding the problems of complex processing and redundant signaling caused by training multiple models.

In addition, the value configurable by the communication system may also include other configuration information, and the present application is not limited thereto.

In some embodiments, the output of the first model may be determined based on a maximum value configurable by the communication system. The actual configured value of the communication system is within a maximum value, and determining the output of the first model based on the maximum value may enable the output of the first model to include an output corresponding to the actual configuration. That is, even if the configuration of the communication system changes, the output of the first model may cover different system configurations.

Optionally, the first device may crop the output of the first model, so that the cropped output of the first model matches the actual configuration of the communication system. For example, the dimension of the tensor output by the first model may be output at a value configurable by the communication system. The first device may crop the output in a corresponding dimension, so that the cropped output matches the actual configuration.

In some embodiments, the input of the first model may include the first configuration information. The first configuration information may be used to indicate configuration, transmission, and other situations of the communication system and/or the first device.

For example, the first configuration information may be used to indicate one or more of the following information: an actual configuration of the communication system, a configuration of the first reference signal, a moving speed of the first device, a scenario in which the first device is located, or a cell in which the first device is located.

The configuration of the first reference signal may include one or more of the following information: information of power allocation between the first data signal and the first reference signal, a sequence of the first reference signal, or a matrix of the first reference signal.

In case that the second reference signal is also non-orthogonally superimposed with the first data signal, the first configuration information may further include a configuration of the second reference signal. The configuration of the second reference signal may include one or more of the following information: information of power allocation between the second data signal and the second reference signal, a sequence of the second reference signal, or a matrix of the second reference signal.

The present application does not limit the instruction method of the first configuration information. For example, the first configuration information may directly indicate the information described above. As another example, the first configuration information may indicate an index of the information described above.

In some embodiments, the first configuration information may directly indicate one or more of the following information: a number of transmission layers, a number of transmission users, a bandwidth, an MCS, a cell, a configuration of the first reference signal, a configuration of the second reference signal, a terminal speed, or a scenario. In some embodiments, the first configuration information may indicate an index of one or more of the following information: a number of transmission layers, a number of transmission users, a bandwidth, an MCS, a cell, a configuration of the first reference signal, a configuration of the second reference signal, a terminal speed, or a scenario.

In some embodiments, the configuration of the first reference signal may include one or more of: pattern information of power allocation between the first data signal and the first reference signal, or a sequence of the first reference signal. In some embodiments, the configuration of the first reference signal may also indicate an index of the pattern and/or an index of the sequence information. The configuration of the second reference signal is similar to the configuration of the first reference signal, and the description thereof will not be repeated herein.

As described above, the first device may crop the output of the first model. Exemplarily, the cropping may be performed according to the first configuration information. For example, the output of the first model is output according to one or more of the following information configured by the system: the maximum number of transmission layers, the maximum bandwidth, or the maximum modulation order corresponding to the MCS. The output of the first model is cropped according to the first configuration information, to obtain demodulation information conforming to the first configuration information.

In some embodiments, the first model may be used to perform one or more of: channel estimation, symbol detection, or channel decoding. In case that the first model performs channel estimation, the first model may also be referred to as a channel estimation model. In case that the first model performs channel estimation and symbol detection, the first model may be referred to as an integrated receiver model that combines channel estimation and symbol detection. In case that the first model performs channel estimation, symbol detection, and channel decoding, the first model may be referred to as an integrated receiver model that combines channel estimation, symbol detection, and channel decoding.

Exemplarily, according to the function of the first model, the output of the first model may be: an estimated channel (the first model is a channel estimation model), a log-likelihood ratio (the first model is an integrated receiver model combining channel estimation and symbol detection), or a received bitstream (the first model is an integrated receiver model combining channel estimation, symbol detection, and channel decoding).

FIG. 17 is a schematic diagram of a structure of a first device 1700 according to an embodiment of the present application. The first device 1700 may implement the technical solution provided in the present application based on AI/ML. The first device 1700 may also be referred to as an AI/ML receiver.

The first device 1700 may include a first model 1710 and a cropping module 1720.

The first model 1710 may be implemented based on a neural network. The neural network may perform processing according to a dimension corresponding to the maximum possible value for one or more of the following information: a number of transmission layers, a bandwidth, an MCS, or another factor that may affect the output dimension.

For the first model 1710, the input of the first model 1710 may include, for example, one or more of the following currently configured information: a number of transport layers, a bandwidth, or an MCS, or the like. As another example, the input of the first model 1710 may include a first reference signal and/or a second reference signal. As another example, the input to the first model 1710 may include a signal received by the first device 1700.

For the output of the first model 1710, the cropping module 1720 may crop according to one or more of the following currently configured information: a number of transmission layers, a bandwidth, an MCS, or another factor that may affect the output dimension, thereby obtaining one or more of: an estimated channel, a log-likelihood ratio, or a received bitstream.

In order to facilitate understanding, the AI/ML receiver provided by the present application will be described below with reference to a first embodiment and a second embodiment.

### First embodiment

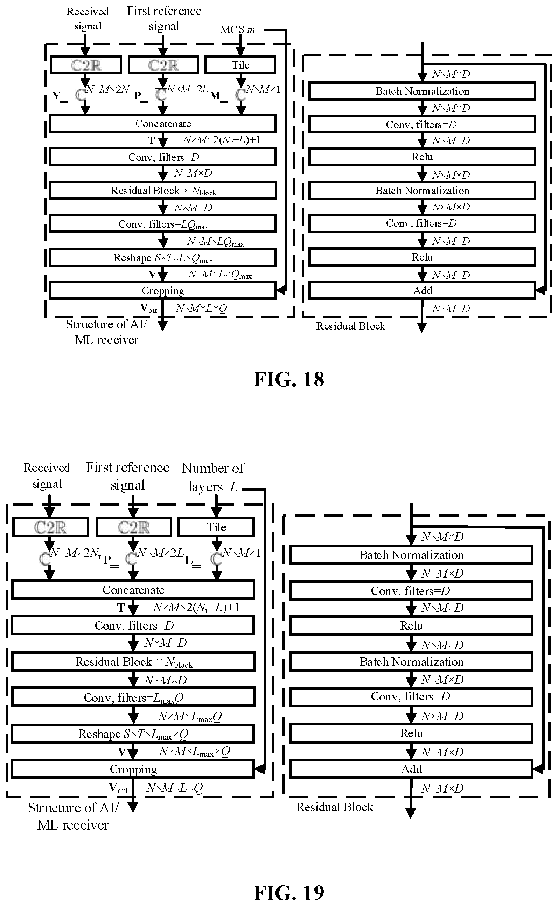

FIG. 18 is an example diagram of a structure of an AI/ML receiver according to the first embodiment. FIG. 18 illustrates a technical solution of an integrated receiver MCS generalization.

In the communication system applicable to FIG. 18, the resource unit allocated by the communication system is N subcarriers × M time domain OFDM symbols, and the system configuration is that MCS = m, L-layer transmission, and there is no second reference signal. In the model structure illustrated in FIG. 18, the overall structure takes a residual convolution network having the number D of convolution kernels and the number N_{block} of residual blocks as the main framework.

It should be noted that in the first embodiment, other network structures may be used as the basic framework for network design, and the present application is not limited thereto.

First, the input of the model includes an MCS index m indicating the encoding and modulation manner as auxiliary information, to guide the model to process the signal of the target MCS configuration, and the scalar m is copied and tiled into the MCS information tensor M∈*C*^{*N*×*M*×1}*.* To facilitate signal processing of the model, the received signal and the first reference signal tensors in complex number form are converted into the tensors Y∈*C*^{*N*×*M*×2*Nr*} and P∈*C*^{*N*×*M*×*L*} in real number form, respectively.

Further, the MCS information tensor, the received signal tensor, and the first reference signal tensor are concatenated to obtain a feature map T∈*C*^{*N*×*M*×2(*N*r+*L*)+1}, which is sent to a subsequent residual convolution network for processing.

Exemplarily, the specific structure of the residual block may be as illustrated on the right side of FIG. 18. The residual block may include: batch normalization, convolution, rectified linear unit (Relu) activation function, summation (add), etc.

After processing, the AI/ML integrated receiver outputs the log-likelihood ratio tensor V ∈ *C*^{*N×M×L×Q*max}*.* Qₘₐₓ represents the maximum number of bits per symbol corresponding to the largest modulation order among all possible configured MCS types supported by the system. The processing of the AI/ML integrated receiver may include convolution (conv) and/or reshaping. The convolutional filters may satisfy that: filters=*LQ*ₘₐₓ.

Further, the last dimension of the tensor V∈*C*^{*N*×*M×L*×*Q*max} is cropped according to the currently set MCS, and the final output log-likelihood ratio tensor Vₒᵤₜ∈*C*^{*N*×*M*×*L*×*Q*} is obtained and sent to the subsequent channel decoding module. Q represents the number of bits per symbol corresponding to the modulation order of the configured MCS.

### Second embodiment

FIG. 19 is an example diagram of a structure of an AI/ML receiver according to the second embodiment. FIG. 19 illustrates a technical solution of an integrated receiver layer generalization.

For the communication system applicable to FIG. 19, the resource unit allocated by the communication system is N subcarriers × M time domain OFDM symbols, and the system configuration is that MCS = m, L-layer transmission, and there is no second reference signal. In the model structure illustrated in FIG. 19, the overall structure takes a residual convolution network having the number D of convolution kernels and the number N_{block} of residual blocks as the main framework.

It should be noted that in the second embodiment, other network structures may be used as the basic framework for network design, and the present application is not limited thereto.

First, the input of the model includes the number L of transmission layers configured by the system as auxiliary information, to guide the model to process the signal of the target number of transmission layers, and the scalar L is copied and tiled into the number of layers information tensor L∈*C*^{*N*×*M*×1}. To facilitate signal processing of the model, the received signal and the first reference signal tensors in complex number form are converted into the tensors Y∈*C*^{*N*×*M*×2*N*r} and P∈*C*^{*N*×*M*×*L*} in real number form, respectively.

Further, the number of layers information tensor, the received signal tensor, and the first reference signal tensor are concatenated to obtain a feature map T∈*C*^{*N*×*M*×2(*N*r+*L*)+1}, which is sent to a subsequent residual convolution network for processing.

Exemplarily, the specific structure of the residual block may be as illustrated on the right side of FIG. 19. The residual block may include: batch normalization, convolution, Relu activation function, summation (add), etc.

After processing, the AI/ML integrated receiver outputs a log-likelihood ratio tensor V∈*C*^{*N*×*M*×*L*max×*Q*}. Q represents the number of bits per symbol corresponding to the MCS configured by the system, and Lₘₐₓ represents the maximum number of transmission layers that the system can support. Further, the third dimension of the tensor V∈*C*^{*N*×*M*×*L*max×*Q*} is cropped according to the currently set number L of transmission layers, and the final output log-likelihood ratio tensor Vₒᵤₜ∈*C*^{*N*×*M*×*L*×*Q*} is obtained and sent to the subsequent channel decoding module.

It is to be understood that The first embodiment and The second embodiment may be implemented individually or in combination, and the present application is not limited thereto.

For example, if The first embodiment and The second embodiment are implemented in combination, after processing, the AI/ML integrated receiver outputs the log-likelihood ratio tensor V∈*C*^{*N*×*M*×*L*ma*x*×*Qmax*}. Qₘₐₓ represents the maximum number of bits per symbol corresponding to the largest modulation order among all possible configured MCS types supported by the system. Lₘₐₓ represents the maximum number of transmission layers that the system can support. Further, the third dimension of the tensor V∈*C*^{*N*×*M*×*L*ma*x*×*Qmax*} is cropped according to the currently set number L of transmission layers, and the last dimension of the tensor V∈*C*^{*N*×*M*×*Lmax×Q*max} is cropped according to the currently set MCS. The final output log-likelihood ratio tensor Vₒᵤₜ∈*C*^{*N*×*M*×*L*×*Q*} is obtained and sent to the subsequent channel decoding module. Q represents the number of bits per symbol corresponding to the modulation order of the configured MCS.

It should be noted that when the first model is a separate channel estimation model, the log-likelihood ratio output in The first embodiment and The second embodiment may be changed to the estimated channel tensor. The difference in implementation is that the label of the log-likelihood ratio tensor is changed to the channel tensor as the label in the training stage.

It should be noted that, in some embodiments, the RB described above may also be referred to as a physical resource block (PRB). That is, PRB and RB are interchangeable.

Method embodiments of the present application are described in detail above, and device embodiments of the present application are described in detail below. It should be understood that the description of the method embodiment and the description of the device embodiment correspond to each other. Therefore, the portions not described in detail can be referred to the foregoing method embodiments.

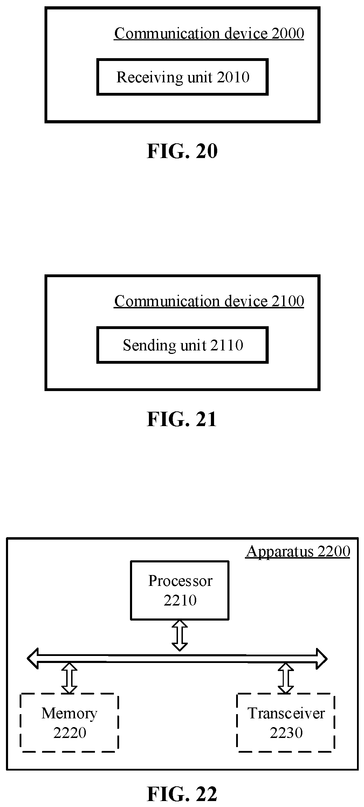

FIG. 20 illustrates a schematic diagram of a structure of a communication device 2000 according to an embodiment of the present application. The communication device 2000 is a first device. The communication device 2000 includes a receiving unit 2010.

The receiving unit 2010 is used to receive a first data signal and a first reference signal. The first reference signal and the first data signal are non-orthogonally superimposed.

In an optional embodiment, the receiving unit 2010 may be a transceiver 2230. The communication device 2000 may further include a processor 2210 and a memory 2220, as specifically illustrated in FIG. 22.

FIG. 21 illustrates a schematic diagram of a structure of a communication device 2100 according to an embodiment of the present application. The communication device 2100 is a second communication device. The communication device 2100 includes a sending unit 2110.

The sending unit 2110 is used to send a first data signal and a first reference signal to a first device. The first reference signal and the first data signal are non-orthogonally superimposed.

In an optional embodiment, the sending unit 2110 may be a transceiver 2230. The communication device 2100 may further include a processor 2210 and a memory 2220, as specifically illustrated in FIG. 22.

FIG. 22 is a schematic diagram of a structure of a communication apparatus according to an embodiment of the present application. The dashed line in FIG. 22 represents that the unit or module is optional. The apparatus 2200 may be used to implement the methods described in the above method embodiments. The apparatus 2200 may be a chip, a terminal device, or a network device.

The apparatus 2200 may include one or more processors 2210. The processor 2210 may support the apparatus 2200 to implement the methods described in the above method embodiments. The processor 2210 may be a general-purpose processor or a special-purpose processor. For example, the processor may be a central processing unit (CPU). Alternatively, the processor may also be another general-purpose processor, a digital signal processor (DSP), an application specific integrated circuit (ASIC), an field programmable gate array (FPGA) or other programmable logic devices, a discrete gate or transistor logic device, or a discrete hardware component. The general-purpose processor may be a microprocessor, or the processor may be any conventional processor or the like.

The apparatus 2200 may also include one or more memories 2220. The memory 2220 has stored a program, and the program may be executed by the processor 2210, to cause the processor 2210 to perform the methods described in the above method embodiments. The memory 2220 may a separate device independent of the processor 2210, or may be integrated in the processor 2210.

The apparatus 2200 may also include a transceiver 2230. The processor 2210 may communicate with other devices or chips through the transceiver 2230. For example, the processor 2210 may send and receive data with other devices or chips through the transceiver 2230.

An embodiment of the present application also provides a computer-readable storage medium for storing a program. The computer-readable storage medium can be applied to the communication device provided by the embodiment of the present application, and the program causes the computer to execute the method executed by the communication device in the respective embodiments of the present application.

An embodiment of the present application also provides a computer program product. The computer program product includes a program. The computer program product can be applied to the communication device provided by the embodiment of the present application, and the program causes the computer to execute the method executed by the communication device in the respective embodiments of the present application.

An embodiment of the present application also provides a computer program. The computer program can be applied to the communication device provided by the embodiment of the present application, and the computer program causes the computer to execute the method executed by the communication device in the respective embodiments of the present application.

It should be understood that the terms "system" and "network" may be used interchangeably in the present application. In addition, the terminology used in the present application is for explanation of specific embodiments of the present application only, and is not intended to limit the present application.

It is to be understood that the terms "first," "second," "third," and "fourth," etc. in the description, claims, and drawings of the present application are used to distinguish different objects, and are not used to describe a particular order. Furthermore, the terms "including" and "having" and any variations thereof are intended to cover non-exclusive inclusions.

The "including" mentioned in the embodiments of the present application may be a direct indication, an indirect indication, or may represent an associated relationship. For example, A indicates B, which may mean that A directly indicates B, for example, B can be acquired through A. It may also mean that A indirectly indicates B, for example, A indicates C, and B can be acquired through C. It may also mean that there is an associated relationship between A and B.

In embodiments of the present application, "B corresponding to A" means that B is associated with A, and B can be determined according to A. However, it should also be understood that determining B according to A does not mean that B is determined only according to A, and that B may be determined according to A and/or other information.

In the embodiments of the present application, the term "correspond" may represent that there is a direct correspondence or indirect correspondence relationship between the two, may represent that there is an association between the two, or may represent a relationship of indicating and being indicated, configuring and being configured, or the like.

In the embodiment of the present application, "predefined" or "preconfigured" may be implemented by pre-storing corresponding codes, tables in the device (for example, including the terminal device and network device), or in another manner that can be used to indicate relevant information, and the present application does not limit the specific implementation manner thereof. For example, "predefined" may refer to defined in the protocol.

In the embodiments of the present application, the "protocol" may refer to a standard protocol in the field of communication, and may include, for example, a LTE protocol, an NR protocol, and related protocols applied to a future communication system, which are not limited in the present application.

The term "and/or" in the embodiments of the present application is only an association relationship describing associated objects, and indicates that there may be three kinds of relationships. For example, A and/or B may indicate that A exists alone, A and B exist simultaneously, and B exists alone. In addition, the character "/" herein generally indicates that the associated objects are in an "or" relationship.

In the embodiments of the present application, the "including" may refer to directly including or indirectly including. Optionally, the "including" mentioned in the embodiments of the present application may be replaced with "indicating" or "for determining". For example, "A includes B" can be replaced with "A indicates B", or "A is used for determining B".

In various embodiments of the present application, the size of the sequence number in the above-described process does not mean the sequence of execution (the sequence of execution in each process should be determined by its function and internal logic), and should not constitute any limitation on the implementation of the embodiments of the present application.

It should be understood that the disclosed system, apparatus and method in several embodiments provided in the present disclosure, may be implemented in other manners. For example, the device embodiments described above are merely schematic, for example, the division of units is only a logical function division, and there may be other division manners in actual implementation. For example, multiple units or components may be combined, or may be integrated into another system; some features may be ignored or not executed. In addition, the coupling or direct coupling or communication connection between each other illustrated or discussed may be an indirect coupling or communication connection through some interfaces, devices or units, which may be electrical, mechanical or otherwise.

The units described as separate components may or may not be physically separate, and the units displayed as units may or may not be physical units, that is, they may be located in one place or may be distributed over multiple network units. Some or all of the units may be selected according to actual needs to achieve the purpose of the solution of the present embodiment.

Furthermore, various functional units in the embodiments of the present application may be integrated into one processing unit or physically present alone, or two or more units may be integrated in one unit.

In the embodiments described above, it may be implemented in whole or in part by software, hardware, firmware, or any combination thereof. When implemented by using software, it may be implemented in whole or in part in the form of a computer program product. The computer program product includes one or more computer instructions. When the computer program instructions are loaded and executed on a computer, the processes or functions according to the embodiments of the present application are generated in whole or in part. The computer may be a general purpose computer, a special purpose computer, a computer network, or another programmable apparatus. The computer instructions may be stored in a computer-readable storage medium or transmitted from a computer-readable storage medium to another computer-readable storage medium. For example, the computer instructions may be transmitted from one website site, computer, server, or data center to another website site, computer, server, or data center in the wired (e.g., coaxial cable, optical fiber, digital subscriber line (DSL)) or wireless (e.g., infrared, wireless, microwave, etc.) manner. The computer-readable storage medium may be any available medium read by a computer, or may be a data storage device such as a server, a data center, or the like that integrates one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above are merely detailed embodiments of the present application, but the protection scope of the present application is not limited thereto, and any person skilled in the art can easily think of changes or substitutions within the technical scope disclosed in the present application, which should be covered within the protection scope of the present application. Therefore, the protection scope of the present application should be based on the protection scope of the claims.

## Claims

1. A wireless communication method, comprising:
receiving, by a first device, a first data signal and a first reference signal;
wherein the first reference signal and the first data signal are non-orthogonally superimposed.

2. The method of claim 1, further comprising:
receiving, by the first device, a second reference signal;
wherein the second reference signal and the first data signal are non-orthogonally superimposed, and the first reference signal and the second reference signal satisfy that:
for transmission of a same layer and/or transmission of a same user, the first reference signal and the second reference signal are orthogonal, or a code domain correlation between the first reference signal and the second reference signal is less than or equal to a first threshold.

3. The method of claim 2, wherein the orthogonality comprises code domain orthogonality, and the code domain orthogonality satisfies that: ||P₁⊙P₂||_{F}=0, wherein P₁ represents a pilot matrix of a first reference signal, P₂ represents a pilot matrix of a second reference signal, || ||_{F} represents a Frobenius norm, and ⊙ represents a Hadamard product.

4. The method of claim 2 or 3, wherein the second reference signal comprises one or more of: a channel state indication reference signal (CSI-RS), a demodulation reference signal (DMRS), a phase tracking reference signal (PT-RS), a sounding reference signal (SRS), a synchronization signal block (SSB), or a positioning reference signal (PRS).

5. The method of any one of claims 1-4, wherein the first reference signal is transmitted through a first layer and a second layer, and/or the first reference signal is a reference signal for a first user and a second user, and the first reference signal satisfies that:
the first reference signal of the first layer and the first reference signal of the second layer are orthogonal, or a code domain correlation between the first reference signal of the first layer and the first reference signal of the second layer is less than or equal to a second threshold; and/or
the first reference signal for the first user and the first reference signal for the second user are orthogonal, or a code domain correlation between the first reference signal for the first user and the first reference signal for the second user is less than or equal to a third threshold.

6. The method of claim 5, wherein the orthogonality comprises code domain orthogonality, and the code domain orthogonality satisfies that: ∥P'*ₗ*⊙P'*ⱼ*∥_{F}=0, wherein P'*ₗ* represents a pilot matrix for the first reference signal of the first layer or the first reference signal for the first user, P'*ⱼ* represents a pilot matrix for the first reference signal of the second layer or the first reference signal for the second user, ∥ ∥_{F} represents a Frobenius norm, and ⊙ represents a Hadamard product.

7. The method of any one of claims 2-6, the orthogonality comprises: frequency domain orthogonality, time domain orthogonality, time-frequency domain orthogonality, or code domain orthogonality.

8. The method of any one of claims 1-7, wherein the first reference signal comprises one or more of: a channel state indication reference signal (CSI-RS), a demodulation reference signal (DMRS), a phase tracking reference signal (PT-RS), a sounding reference signal (SRS), a synchronization signal block (SSB), or a positioning reference signal (PRS).

9. The method of any one of claims 1-8, wherein the non-orthogonal superimposition comprises that: the first data signal and the first reference signal both occupy a first resource element (RE).

10. The method of any one of claims 1-9, further comprising:
processing, by the first device, the first reference signal by using a first model;
wherein an output of the first model is determined based on a value configurable by a communication system.

11. The method of claim 10, wherein the output of the first model is determined based on a maximum value configurable by the communication system.

12. The method of claim 10 or 11, wherein the value configurable by the communication system comprises one or more of following values: a number of transmission layers, a bandwidth, a modulation and coding scheme (MCS), or a number of transmission users.

13. The method of any one of claims 10-12, further comprising:
cropping, by the first device, an output of the first model;
wherein a cropped output of the first model matches an actual configuration of the communication system.

14. The method of any one of claims 10-13, wherein an input of the first model comprises first configuration information, and the first configuration information is used to indicate one or more of:
an actual configuration of the communication system;
a configuration of the first reference signal;
a moving speed of the first device;
a scenario in which the first device is located; or
a cell in which the first device is located.

15. The method of claim 14, wherein the configuration of the first reference signal comprises one or more of:
information of power allocation between the first data signal and the first reference signal; or
a sequence of the first reference signal.

16. The method of any one of claims 10-15, wherein the first model is used to perform one or more of: channel estimation, symbol detection, or channel decoding.

17. The method of any one of claims 10-16, wherein the first model is an artificial intelligence (AI) model.

18. A wireless communication method, comprising:
sending, by a second device, a first data signal and a first reference signal to a first device;
wherein the first reference signal and the first data signal are non-orthogonally superimposed.

19. The method of claim 18, further comprising:
sending, by the second device, a second reference signal to the first device;
wherein the second reference signal and the first data signal are non-orthogonally superimposed, and the first reference signal and the second reference signal satisfy that:
for transmission of a same layer and/or transmission of a same user, the first reference signal and the second reference signal are orthogonal, or a code domain correlation between the first reference signal and the second reference signal is less than or equal to a first threshold.

20. The method of claim 18, wherein the orthogonality comprises code domain orthogonality, and the code domain orthogonality satisfies that: ||P₁⊙P₂||_{F}=0, wherein P₁ represents a pilot matrix of a first reference signal, P₂ represents a pilot matrix of a second reference signal, || ||_{F} represents a Frobenius norm, and ⊙ represents a Hadamard product.

21. The method of claim 18 or 19, wherein the second reference signal comprises one or more of: a channel state indication reference signal (CSI-RS), a demodulation reference signal (DMRS), a phase tracking reference signal (PT-RS), a sounding reference signal (SRS), a synchronization signal block (SSB), or a positioning reference signal (PRS).

22. The method of any one of claims 18-21, wherein the first reference signal is transmitted through a first layer and a second layer, and/or the first reference signal is a reference signal for a first user and a second user, and the first reference signal satisfies that:
the first reference signal of the first layer and the first reference signal of the second layer are orthogonal, or a code domain correlation between the first reference signal of the first layer and the first reference signal of the second layer is less than or equal to a second threshold; and/or
the first reference signal for the first user and the first reference signal for the second user are orthogonal, or a code domain correlation between the first reference signal for the first user and the first reference signal for the second user is less than or equal to a third threshold.

23. The method of claim 22, wherein the orthogonality comprises code domain orthogonality, and the code domain orthogonality satisfies that: ∥P'*ₗ*⊙P'*ⱼ*∥_{F}=0, wherein P'*ₗ* represents a pilot matrix for the first reference signal of the first layer or the first reference signal for the first user, P'*ⱼ* represents a pilot matrix for the first reference signal of the second layer or the first reference signal for the second user, || ||_{F} represents a Frobenius norm, and ⊙ represents a Hadamard product.

24. The method of any one of claims 19-23, the orthogonality comprises: frequency domain orthogonality, time domain orthogonality, time-frequency domain orthogonality, or code domain orthogonality.

25. The method of any one of claims 18-24, wherein the first reference signal comprises one or more of: a channel state indication reference signal (CSI-RS), a demodulation reference signal (DMRS), a phase tracking reference signal (PT-RS), a sounding reference signal (SRS), a synchronization signal block (SSB), or a positioning reference signal (PRS).

26. The method of any one of claims 18-25, wherein the non-orthogonal superimposition comprises that: the first data signal and the first reference signal both occupy a first resource element (RE).

27. A communication device, wherein the communication device is a first device, and the communication device comprises:
a receiving unit, configured to receive a first data signal and a first reference signal;
wherein the first reference signal and the first data signal are non-orthogonally superimposed.

28. The communication device of claim 27, wherein the communication device is further configured to:
receive a second reference signal;
wherein the second reference signal and the first data signal are non-orthogonally superimposed, and the first reference signal and the second reference signal satisfy that:
for transmission of a same layer and/or transmission of a same user, the first reference signal and the second reference signal are orthogonal, or a code domain correlation between the first reference signal and the second reference signal is less than or equal to a first threshold.

29. The communication device of claim 28, wherein the orthogonality comprises code domain orthogonality, and the code domain orthogonality satisfies that: ∥P₁⊙P₂∥_{F}=0, wherein P₁ represents a pilot matrix of a first reference signal, P₂ represents a pilot matrix of a second reference signal, ∥ ∥_{F} represents a Frobenius norm, and ⊙ represents a Hadamard product.

30. The communication device of claim 28 or 29, wherein the second reference signal comprises one or more of: a channel state indication reference signal (CSI-RS), a demodulation reference signal (DMRS), a phase tracking reference signal (PT-RS), a sounding reference signal (SRS), a synchronization signal block (SSB), or a positioning reference signal (PRS).

31. The communication device according to any one of claims 27-30, wherein the first reference signal is transmitted through a first layer and a second layer, and/or the first reference signal is a reference signal for a first user and a second user, and the first reference signal satisfies that:
the first reference signal of the first layer and the first reference signal of the second layer are orthogonal, or a code domain correlation between the first reference signal of the first layer and the first reference signal of the second layer is less than or equal to a second threshold; and/or
the first reference signal for the first user and the first reference signal for the second user are orthogonal, or a code domain correlation between the first reference signal for the first user and the first reference signal for the second user is less than or equal to a third threshold.

32. The communication device of claim 31, wherein the orthogonality comprises code domain orthogonality, and the code domain orthogonality satisfies that: ∥P'*ₗ*⊙P'*ⱼ*∥_{F}=0, wherein P'*ₗ* represents a pilot matrix for the first reference signal of the first layer or the first reference signal for the first user, P'*ⱼ* represents a pilot matrix for the first reference signal of the second layer or the first reference signal for the second user, ∥ ∥_{F} represents a Frobenius norm, and ⊙ represents a Hadamard product.

33. The communication device of any one of claims 28-32, the orthogonality comprises: frequency domain orthogonality, time domain orthogonality, time-frequency domain orthogonality, or code domain orthogonality.

34. The communication device of any one of claims 27-33, wherein the first reference signal comprises one or more of: a channel state indication reference signal (CSI-RS), a demodulation reference signal (DMRS), a phase tracking reference signal (PT-RS), a sounding reference signal (SRS), a synchronization signal block (SSB), or a positioning reference signal (PRS).

35. The communication device of any one of claims 27-34, wherein the non-orthogonal superimposition comprises that: the first data signal and the first reference signal both occupy a first resource element (RE).

36. The communication device of any one of claims 27-35, wherein the communication device is further configured to:
process the first reference signal by using a first model;
wherein an output of the first model is determined based on a value configurable by a communication system.

37. The communication device of claim 36, wherein the output of the first model is determined based on a maximum value configurable by the communication system.

38. The communication device of claim 36 or 37, wherein the value configurable by the communication system comprises one or more of following values: a number of transmission layers, a bandwidth, a modulation and coding scheme (MCS), or a number of transmission users.

39. The communication device of any one of claims 36-38, wherein the communication device is further configured to:
cropping an output of the first model;
wherein a cropped output of the first model matches an actual configuration of the communication system.

40. The communication device of any one of claims 36-39, wherein an input of the first model comprises first configuration information, and the first configuration information is used to indicate one or more of:
an actual configuration of the communication system;
a configuration of the first reference signal;
a moving speed of the first device;
a scenario in which the first device is located; or
a cell in which the first device is located.

41. The communication device of claim 40, wherein the configuration of the first reference signal comprises one or more of:
information of power allocation between the first data signal and the first reference signal; or
a sequence of the first reference signal.

42. The communication device of any one of claims 36-41, wherein the first model is used to perform one or more of: channel estimation, symbol detection, or channel decoding.

43. The communication device of any one of claims 36-42, wherein the first model is an artificial intelligence (AI) model.

44. A communication device, wherein the communication device is a second device, and the communication device comprises:
a sending unit, configured to send a first data signal and a first reference signal to a first device;
wherein the first reference signal and the first data signal are non-orthogonally superimposed.

45. The communication device of claim 44, wherein the communication device is further configured to:
send a second reference signal to the first device;
wherein the second reference signal and the first data signal are non-orthogonally superimposed, and the first reference signal and the second reference signal satisfy that:
for transmission of a same layer and/or transmission of a same user, the first reference signal and the second reference signal are orthogonal, or a code domain correlation between the first reference signal and the second reference signal is less than or equal to a first threshold.

46. The communication device of claim 45, wherein the orthogonality comprises code domain orthogonality, and the code domain orthogonality satisfies that: ||P₁⊙P₂||_{F}=0, wherein P₁ represents a pilot matrix of a first reference signal, P₂ represents a pilot matrix of a second reference signal, || ||_{F} represents a Frobenius norm, and ⊙ represents a Hadamard product.

47. The communication device of claim 45 or 46, wherein the second reference signal comprises one or more of: a channel state indication reference signal (CSI-RS), a demodulation reference signal (DMRS), a phase tracking reference signal (PT-RS), a sounding reference signal (SRS), a synchronization signal block (SSB), or a positioning reference signal (PRS).

48. The communication device according to any one of claims 44-47, wherein the first reference signal is transmitted through a first layer and a second layer, and/or the first reference signal is a reference signal for a first user and a second user, and the first reference signal satisfies that:
the first reference signal of the first layer and the first reference signal of the second layer are orthogonal, or a code domain correlation between the first reference signal of the first layer and the first reference signal of the second layer is less than or equal to a second threshold; and/or
the first reference signal for the first user and the first reference signal for the second user are orthogonal, or a code domain correlation between the first reference signal for the first user and the first reference signal for the second user is less than or equal to a third threshold.

49. The communication device of claim 48, wherein the orthogonality comprises code domain orthogonality, and the code domain orthogonality satisfies that: ∥P'*ₗ*⊙P'*ⱼ*∥_{F}=0, wherein P'*ₗ* represents a pilot matrix for the first reference signal of the first layer or the first reference signal for the first user, P'*ⱼ* represents a pilot matrix for the first reference signal of the second layer or the first reference signal for the second user, ∥ ∥_{F} represents a Frobenius norm, and ⊙ represents a Hadamard product.

50. The communication device of any one of claims 45-49, the orthogonality comprises: frequency domain orthogonality, time domain orthogonality, time-frequency domain orthogonality, or code domain orthogonality.

51. The communication device of any one of claims 44-50, wherein the first reference signal comprises one or more of: a channel state indication reference signal (CSI-RS), a demodulation reference signal (DMRS), a phase tracking reference signal (PT-RS), a sounding reference signal (SRS), a synchronization signal block (SSB), or a positioning reference signal (PRS).

52. The communication device of any one of claims 44-51, wherein the non-orthogonal superimposition comprises that: the first data signal and the first reference signal both occupy a first resource element (RE).

53. A communication device, comprising: a memory and a processor, wherein the memory is used for storing a program, and the processor is used for calling the program in the memory, to cause the communication device to perform the method of any one of claims 1-26.

54. An apparatus, comprising a processor, wherein the processor is used for calling a program from a memory, to cause the apparatus to perform the method of any one of claims 1-26.

55. A chip, comprising a processor, wherein the processor is used for calling a program from a memory, to cause a device on which the chip is mounted to perform the method of any one of claims 1-26.

56. A computer readable storage medium, having stored thereon a program that causes a computer to perform the method of any one of claims 1-26.

57. A computer program product, comprising a program that causes a computer to perform the method of any one of claims 1-26.

58. A computer program, causing a computer to perform the method of any one of claims 1-26.
